# EUROPEAN PATENT APPLICATION

(11) **EP 4 738 866 A1**
(43) Date of publication of application: **06.05.2026**
(21) Application number: 25205275.8
(22) Date of filing: 29.09.2025
(51) Int. Cl.: H04N 23/74, G03B 15/05, H05B 47/19

(54) **CONTROL APPARATUS, IMAGING SYSTEM, CONTROL METHOD, AND PROGRAM**

(30) Priority: 01.11.2024 JP 2024193267
(71) Applicant: Canon Kabushiki Kaisha, Tokyo, 146-8501 (JP)
(72) Inventor: YAMAMOTO, Yutaka, Ohta-ku, Tokyo, 146-8501 (JP)
(74) Representative: TBK

(57) **Abstract**

A control apparatus (300) includes a control unit (301) configured to determine whether a first illumination apparatus (400) or a second illumination apparatus (500) is wirelessly connected, and determine a setting regarding light emission for each of the first illumination apparatus and the second illumination apparatus so that the setting for the first illumination apparatus and the setting for the second illumination apparatus are different from each other, according to a determination result of a wireless connection. In that the first illumination apparatus and the second illumination apparatus belong to different groups, and the control unit is configured to determine the setting for each group.

## Description

### TECHNICAL FIELD

The disclosure relates to one or more embodiments of a control apparatus, an imaging system, a control method, and a program.

### BACKGROUND

One of the conventional imaging systems (multi-light illumination apparatus control systems) uses multiple illumination apparatuses capable of wireless communication to provide illumination during imaging. Japanese Patent Application Laid-Open No. 2009-098296 discloses a method for quickly changing the settings of each illumination apparatus and confirming the effects.

The plurality of illumination apparatuses in the multi-light illumination apparatus control system may include different types of illumination apparatuses, such as illumination apparatuses that provide illumination using flashlight and illumination apparatuses that provide illumination using steady light (continuous light). To provide proper illumination using multiple types of illumination apparatuses, light-emission settings may be properly set for each type (group) of illumination apparatus. However, the method disclosed in Japanese Patent Application Laid-Open No. 2009-098296 does not allow proper light-emission settings to be set for each type of illumination apparatus.

### SUMMARY

The disclosure in its first aspect provides a control apparatus as specified in claims 1 to 11.

The disclosure in its second aspect provides an imaging system as specified in claim 12.

The disclosure in its third aspect provides a control method as specified in claim 13.

The disclosure in its fourth aspect provides a program as specified in claim 14.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic diagram of imaging systems according to first, third to fifth embodiments.
Fig. 2 is a block diagram of the imaging systems according to the first, third to fifth embodiments.
Figs. 3A and 3B are external views of an illumination apparatus according to each embodiment.
Fig. 4 is a flowchart illustrating processing of a sender illumination apparatus according to the first embodiment.
Fig. 5 is a flowchart illustrating wireless communication processing of the sender illumination apparatus according to the first embodiment.
Fig. 6 is a flowchart illustrating processing of a flashlight illumination apparatus according to the first embodiment.
Fig. 7 is a flowchart illustrating processing of a steady-light illumination apparatus according to the first embodiment.
Fig. 8 is an external view of wireless setting screen display of a sender illumination apparatus according to the first embodiment.
Fig. 9 is a block diagram of an imaging system according to a second embodiment.
Figs. 10A and 10B are external views of an illumination apparatus according to the second embodiment.
Fig. 11 is a flowchart illustrating processing of a receiver illumination apparatus according to the second embodiment.
Fig. 12 is a flowchart illustrating wireless communication processing of a sender illumination apparatus according to a third embodiment.
Figs. 13A and 13B are external views of wireless settings screen display of the sender illumination apparatus according to the third embodiment.
Fig. 14 is a flowchart illustrating wireless communication processing of a sender illumination apparatus according to a fourth embodiment.
Fig. 15 is a flowchart illustrating wireless communication processing of a sender illumination apparatus according to a fifth embodiment.
Fig. 16 is an external view of wireless settings screen display of the sender illumination apparatus according to the fifth embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments according to the disclosure.

### FIRST EMBODIMENT

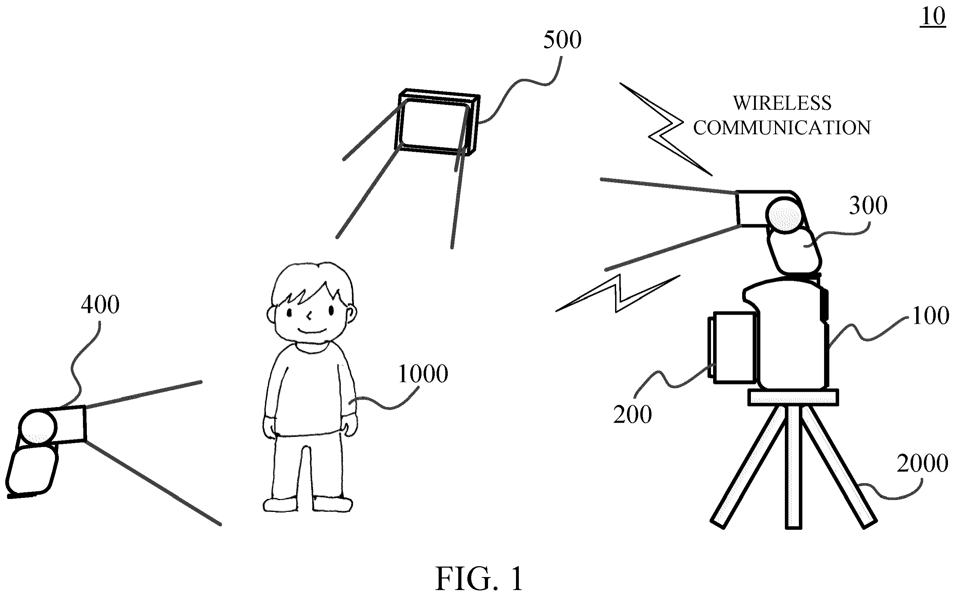

Referring now to Fig. 1, a description will be given of an imaging system (multi-light illumination apparatus control system, illumination system) 10 according to a first embodiment of the disclosure. Fig. 1 is a schematic diagram of the imaging system 10. The imaging system 10 includes a camera body (digital single-lens reflex camera, image pickup apparatus) 100, a sender illumination apparatus (transmitting-side illumination apparatus) 300, a flashlight illumination apparatus (receiving-side illumination apparatus) 400, and a steady-light illumination apparatus (receiving-side illumination apparatus) 500. The sender illumination apparatus 300 is an illumination apparatus that is directly connectable to (attachable to and detachable from) the camera body 100. Each of the flashlight illumination apparatus 400 and the steady-light illumination apparatus 500 is an illumination apparatus that is provided independently of the camera body 100 and functions as a receiver capable of wireless communication with the camera body 100. The flashlight illumination apparatus 400 emits flashlight using a Xe tube. The steady-light illumination apparatus 500 emits steady light using an LED. In this embodiment, the number of flashlight illumination apparatuses 400 may be one or more, and the number of steady-light illumination apparatuses 500 may be one or more.

The sender illumination apparatus 300, which is directly connected to the connector (camera accessory (ACC) shoe 108) of the camera body 100, is mutually connectable to the camera body 100 via the connector and has a built-in wireless communication circuit and wireless antenna. The flashlight illumination apparatus 400 and steady-light illumination apparatus 500, which serve as receivers and are provided independently of the camera body 100, have built-in wireless communication circuits and wireless antennas, similarly to the sender illumination apparatus 300. The sender illumination apparatus 300, flashlight illumination apparatus 400, and steady-light illumination apparatus 500 can communicate wirelessly using, for example, a known wireless communication standard such as IEEE 802.15.4.

Fig. 1 assumes strobe imaging in a photo studio or the like, using a camera body 100 fixed relative to an object 1000 by a tripod 2000. In this embodiment, the sender illumination apparatus 300 connected to the camera body 100 is the sender device, and the flashlight illumination apparatus 400 and steady-light illumination apparatus 500, which are independent of the camera body 100, are each the receiver devices. The sender illumination apparatus 300 and flashlight illumination apparatus 400 perform strobe synchronization imaging (photography), synchronizing the light emission timing with the shutter timing of the camera body 100. The steady-light illumination apparatus 500 emits light before the shutter timing of the camera body 100 and is used as illumination during imaging.

In this embodiment, the sender illumination apparatus 300 connected to the camera body 100 is described as the sender device, but the device connected to the camera body 100 can be replaced with a dedicated transmitter capable of wireless communication. If the camera body 100 has a built-in wireless communication circuit and wireless antenna and is capable of wireless communication, an imaging system is conceivable in which the camera body 100 serves as a sender device to send instructions directly to the flashlight illumination apparatus 400 and the steady-light illumination apparatus 500 via the wireless communication.

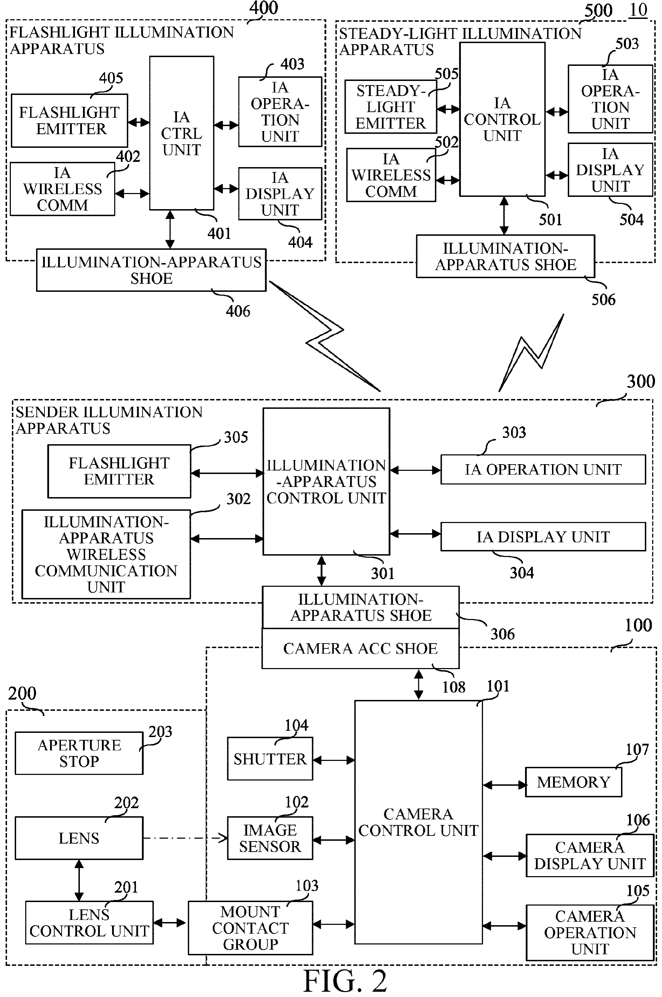

Referring now to Fig. 2, the internal configuration and operation of the imaging system 10 will be described. IA stands for "illumination apparatus." Fig. 2 is a block diagram of the imaging system 10. Reference numeral 100 denotes the camera body, and a lens apparatus (interchangeable lens) 200 is attached to the front of the camera body 100. The lens apparatus 200 is interchangeable, and the camera body 100 and lens apparatus 200 are electrically connected via a mount contact group 103. This embodiment is not limited to this example and can also be applied to an image pickup apparatus in which the lens apparatus and camera body are integrated.

The camera ACC shoe 108 is provided on the top surface of the camera body 100. The camera ACC shoe 108 is connectable to a variety of accessories (external accessories) that include a shoe, and communicable with the accessories via a contact group (not illustrated) provided within the camera ACC shoe 108.

Reference numeral 101 denotes a camera control unit, which is a microcomputer (one or more processors) for operating to control the operation of each part of the camera body 100. The camera control unit 101 also has built-in memory (one or more memories) for storing a variety of adjustment values and programs for executing various controls. This built-in memory also serves as buffer memory for temporarily storing various data processed in various places.

Reference numeral 102 denotes an image sensor such as a CMOS sensor or CCD sensor that converts light from an object that enters through a lens (optical system) 202 into an electrical signal, generates image signals including still and moving images, and outputs them to the camera control unit 101.

Reference numeral 104 denotes a shutter (focal plane shutter) that is positioned between the image sensor 102 and the lens 202 and operates according to instructions from the camera control unit 101. The shutter 104 includes a front curtain and a rear curtain. Exposure of the image sensor 102 starts when the front curtain moves and the shutter opens, and ends when the rear curtain moves and the shutter closes.

Reference numeral 105 denotes a camera operation unit including operating members operable by the user. It detects operations performed by the user via a button, a switch, a dial, a connected device, etc., attached to the camera body 100 and sends a signal corresponding to the operation instruction to the camera control unit 101. For still image capturing, the camera operation unit 105 outputs to the camera control unit 101 an instruction signal (SW1 signal) issued when the user half-presses a release button, and an instruction signal (SW2 signal) issued when the release button is fully pressed. For moving image capturing, it outputs to the camera control unit 101 an instruction signal (REC signal) issued when the user operates a record button.

Reference numeral 106 denotes a camera display unit that displays imaging information and a captured image in accordance with an instruction from the camera control unit 101. Reference numeral 107 denotes a memory that records a captured image. The memory 107 stores images via an interface to a storage medium such as a memory card or hard disk drive (not illustrated).

The camera control unit 101 controls the operation of the camera body 100 based on the output signal of the camera operation unit 105. In a case where the output signal of the camera operation unit 105 is an SW1 signal, it drives the image sensor 102 to capture an image and outputs focus information such as a defocus amount at each focus detection point. It also detects the object from the imaging result and repeats photometry control (light metering control) (AE operation) to measure the object's luminance, and determines the shutter speed, aperture value (F-number), and ISO sensitivity (ISO speed) to be used during imaging from the photometry result. Here, the shutter speed, aperture value, and ISO sensitivity to be used during imaging will be collectively referred to as an exposure control value. The determined exposure control value is displayed on the screen of the camera display unit 106.

In a case where the output signal of the camera operation unit 105 is an SW2 signal, it drives an aperture stop (diaphragm) 203 in the lens 202, sets the sensitivity (ISO sensitivity) of the image sensor 102, and controls the shutter 104 to irradiate light onto the image sensor 102.

In a case where the output signal of the camera operation unit 105 is a record (REC) signal, the sensitivity (ISO sensitivity) and frame rate of the image sensor 102 are set, the image sensor 102 is driven to capture an image, and focus information such as the defocus amount at each focus detection point is output. The camera also detects the object from the captured image and irradiates the image sensor 102 with light while repeating photometry control (AE operation) that measures the luminance of the object.

The lens control unit 201, described below, drives a focus lens (not illustrated) for focusing in the lens 202 in accordance with the instructions from the camera control unit 101, and repeats autofocusing. The camera control unit 101 displays the captured image on the screen of the camera display unit 106 in accordance with the image data acquired from the image sensor 102, and also controls the writing of image data (including sound information) into the memory 107.

Next, the configuration of the lens apparatus 200 will be described. Reference numeral 201 denotes the lens control unit, which is a microcomputer (one or more processors) for operating to control the operation of each unit of the lens apparatus 200. Reference numeral 202 denotes the lens (optical system) that includes a plurality of lens units and forms an object image on the image sensor 102. The lens 202 includes the aperture stop 203 for adjusting a light amount and a focus lens (not illustrated) for focusing. The lens control unit 201 adjusts the light amount taken into the camera body 100 and the focus in accordance with an instruction from the camera control unit 101, using control via the mount contact group 103, and sends distance information and the like at that time to the camera control unit 101.

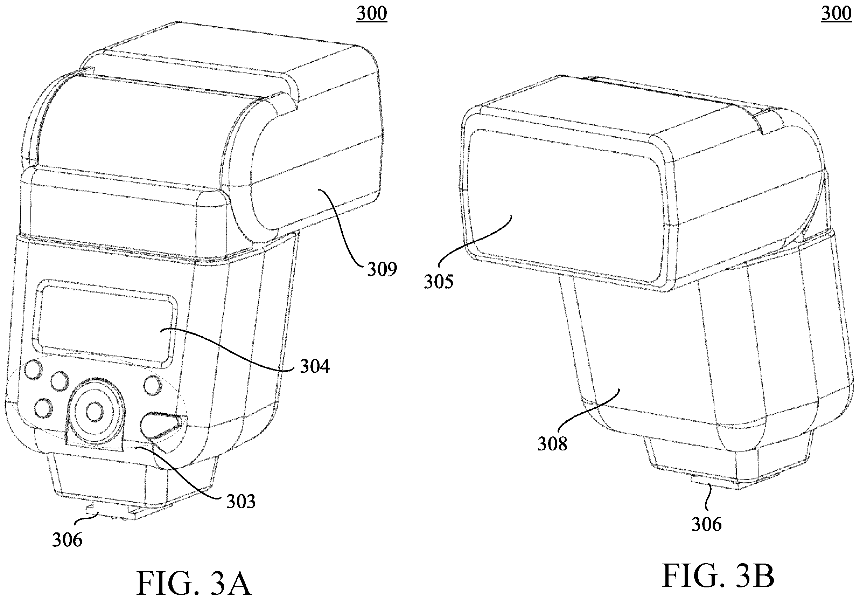

Referring now to Figs. 2, 3A, and 3B, a description will be given of the configurations of the sender illumination apparatus 300, flashlight illumination apparatus 400, and steady-light illumination apparatus 500. Figs. 3A and 3B are external views of the sender illumination apparatus 300. Fig. 3A is a rear perspective view, and Fig. 3B is a front perspective view. In this embodiment, the sender illumination apparatus 300 is a control apparatus (light-emitting control apparatus), the flashlight illumination apparatus 400 is a first illumination apparatus, and the steady-light illumination apparatus 500 is a second illumination apparatus. In this embodiment, the sender illumination apparatus 300 and the flashlight illumination apparatus 400 have the same configuration, so the following description will be based on the sender illumination apparatus 300, and differences in function and operation will be discussed accordingly. Components 301 to 306 of the sender illumination apparatus 300, which will be described later, correspond to components 401 to 406 of the flashlight illumination apparatus 400, respectively. Components 501 to 504 and 506 of the steady-light illumination apparatus 500 will be described as having the same configurations as components 301 to 304 and 306 of the sender illumination apparatus 300.

Reference numeral 301 denotes an illumination-apparatus (IA) control unit (control unit), which is a microcomputer (one or more processors) for operating to control the operation of each unit of the sender illumination apparatus 300. The illumination-apparatus control unit 301 receives a light emission instruction from the camera body 100 via an illumination-apparatus shoe 306, and can cause a flashlight emitter 305 to emit light and send and receive camera information and illumination apparatus information.

The illumination-apparatus control unit 301 can also wirelessly communicate with the illumination-apparatus wireless communication unit (COMM) 402 in the flashlight illumination apparatus 400 and an illumination-apparatus wireless communication unit 502 in the steady-light illumination apparatus 500 via an illumination-apparatus wireless communication unit 302, which will be described later. The illumination-apparatus control unit 301 can cause the flashlight illumination apparatus 400 and the steady-light illumination apparatus 500 to emit light based on light emission instructions from the camera body 100, and can send and receive information between the illumination apparatuses.

The illumination-apparatus control unit 301 also functions as a determining unit that determines whether the illumination apparatus wirelessly connected via the illumination-apparatus wireless communication unit 302 is the flashlight illumination apparatus 400 or the steady-light illumination apparatus 500. The illumination-apparatus control unit 301 sends and receives a control signal related to imaging, such as imaging start and end commands, as well as other information.

An illumination-apparatus control unit (CTRL) 401 in the flashlight illumination apparatus 400 that corresponds to the illumination-apparatus control unit 301 can communicate with the sender illumination apparatus 300 via the illumination-apparatus wireless communication unit 402. The illumination-apparatus control unit 401 receives a light emission instruction from the sender illumination apparatus 300, and can transmit and receive information such as light emission by a flashlight emitter 405, acquisition of information from the sender illumination apparatus 300, settings such as a light emission amount of the flashlight illumination apparatus 400, and charging completion. Similarly, an illumination-apparatus control unit 501 in the steady-light illumination apparatus 500, which corresponds to the illumination-apparatus control unit 301, can communicate with the sender illumination apparatus 300 via an illumination-apparatus wireless communication unit 502. The illumination-apparatus control unit 501 receives a light emission instruction from the sender illumination apparatus 300, and can control emission by a steady-light emitter 505, acquire information about the sender illumination apparatus 300, and send and receive information about settings such as the light emission amount, color temperature (K), and color (RGB) of the steady-light illumination apparatus 500.

Reference numeral 302 denotes the illumination-apparatus wireless communication unit, and is a wireless communication module such as an infrared communication module, Bluetooth (registered trademark) communication module, or wireless LAN communication module. Each of the illumination-apparatus wireless communication unit 402 and the illumination-apparatus wireless communication unit 502 similarly functions as a wireless control unit.

Reference numeral 303 denotes an illumination-apparatus operation unit, which includes operation members operable by the user. It detects operations performed by the user via a button, a dial, etc., attached to the sender illumination apparatus 300, and sends a signal corresponding to the operation instruction to the illumination-apparatus control unit 301. The illumination-apparatus operation unit 303 functions as a selector for performing group selection, etc. in the sender illumination apparatus 300.

Reference numeral 304 denotes an illumination-apparatus display unit (display unit), which has, for example, an LCD panel. In accordance with an instruction from the illumination-apparatus control unit 301, the illumination-apparatus display unit 304 displays setting information such as a light emission amount and wireless communication settings set in the camera body 100 or the sender illumination apparatus 300. The illumination-apparatus display unit 304 also displays information such as the camera communication status and the connection status with the flashlight illumination apparatus 400 and the steady-light illumination apparatus 500.

Reference numeral 305 denotes the flashlight emitter, which receives a light emission operation instruction from the illumination-apparatus control unit 301 and emits light at a specified emission timing and amount. The flashlight emitter 305 primarily includes a discharge tube, reflector, zoom optical system, light emitting circuit, etc. (not illustrated), and is a light emitter (illumination unit) capable of emitting flashlight using a discharge tube. The flashlight emitter 305 can also change a light emission range by moving the zoom optical system. The flashlight emitter 405 in the flashlight illumination apparatus 400 is also a light emitter with a similar function.

On the other hand, the steady-light emitter 505 in the steady-light illumination apparatus 500 receives a light emission operation command from the illumination-apparatus control unit 501, and emits light at a specified timing and light emission amount. The steady-light emitter 505 includes a light emitter such as an LED (not illustrated), a diffuser plate placed in front of the LED, a light emitting circuit, etc., and is a light emitter (illumination unit) capable of steadily emitting light using an LED, etc.

The illumination-apparatus shoe 306 is a connector connectable to the camera ACC shoe 108 of the camera body 100. A contact group (not illustrated) provided within the illumination-apparatus shoe 306 enables communication with the camera control unit 101 in the camera body 100, allowing transmission and reception of information on light emission from the camera body 100 and information about the illumination apparatus.

Reference numeral 308 denotes an illumination apparatus body, which, as illustrated in Figs. 3A and 3B, includes the illumination-apparatus operation unit 303 and illumination-apparatus display unit 304. The illumination apparatus body 308 also houses an illumination-apparatus control unit 301 mounted on a substrate (not illustrated), as well as a battery power supply (not illustrated). Reference numeral 309 denotes an illumination apparatus head unit, which, as illustrated in Figs. 3A and 3B, includes the flashlight emitter 305.

As illustrated in Figs. 3A and 3B, the illumination apparatus body 308 and illumination apparatus head unit 309 are separated, and the illumination apparatus head unit 309 is rotatably held relative to the illumination apparatus body 308. Thereby, an illumination direction changer can be configured to enable the user to point the flashlight emitter 305 in a predetermined direction (e.g., toward a ceiling or wall) for bounce photography.

In a case where the user uses the illumination apparatus as the sender illumination apparatus 300, the sender illumination apparatus 300 is connected to the camera ACC shoe 108 and attached to the camera body 100, and the illumination direction of the flashlight emitter 305 is determined by the illumination direction changer described above. On the other hand, in a case where the user uses the illumination apparatus as a flashlight illumination apparatus 400, it is positioned away from the camera body 100, and the position of the flashlight illumination apparatus 400 relative to the object 1000 and the illumination direction are determined by the illumination direction changer.

A description will now be given of (light) emission group setting and light emission amount setting in the imaging system 10. The user makes settings for the sender illumination apparatus 300 using the illumination-apparatus operation unit 303 while viewing various setting information on the illumination-apparatus display unit 304. In setting the flashlight illumination apparatus 400 in the imaging system 10, the user sets the flashlight illumination apparatus 400 to a receiver state using the wireless setting, performs the wireless connection setting, and enables wireless communication with the sender illumination apparatus 300. In addition, in the flashlight illumination apparatus 400, the user performs the emission group setting for emitting light. Once the emission group has been set, the light is emitted according to the light emission amount setting and emission instruction for each emission group instructed by the sender illumination apparatus 300 in the actual light emission for imaging.

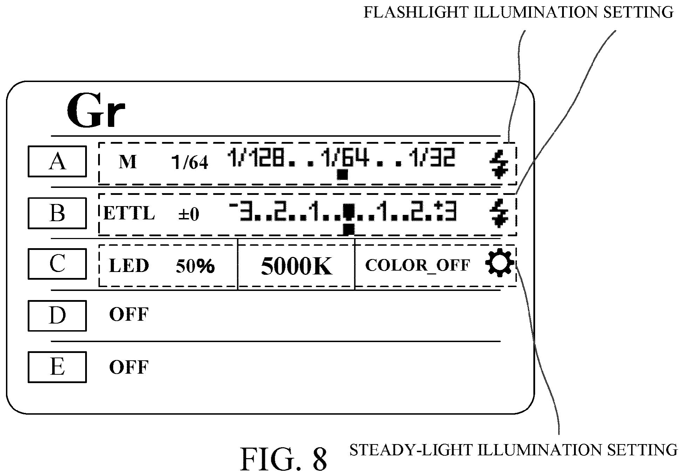

This embodiment can make the emission group setting for each of five groups, referred to as A, B, C, D, and E, as will be described with reference to Fig. 8 below. By preparing a plurality of emission group settings and allowing individual settings for each group, in a case where a plurality of illumination apparatuses are arranged as illustrated in Fig. 1, a light emission amount of each illumination apparatus can be changed, allowing the user to capture images with the desired object illumination.

In a case where the user sets the light emission amount and other settings of a variety of illumination apparatuses using the sender illumination apparatus 300, the user sets the sender illumination apparatus 300 to a sender state using the wireless setting to establish a wireless connection with each of the flashlight illumination apparatus 400 and the steady-light illumination apparatus 500. Then, the user sets the light emission amount for each emission group in the sender illumination apparatus 300. Thereby, in performing the actual light emission during imaging, each illumination apparatus emits light according to the light emission amount setting for each emission group to capture an image with the multi-light illumination.

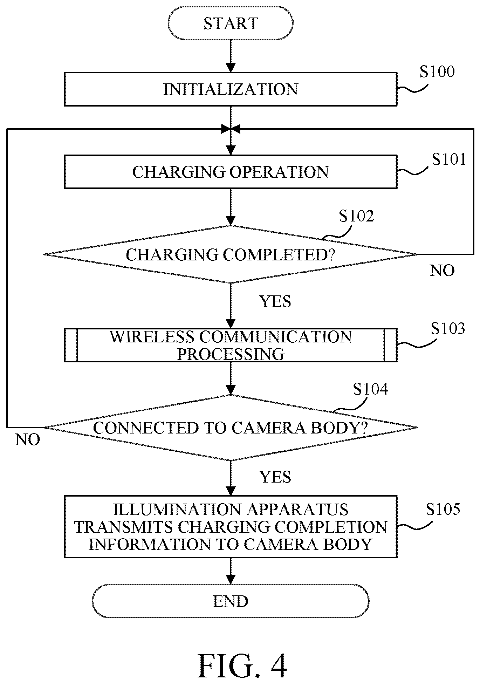

Referring now to Figs. 4 to 8, a description will be given of the operation of the imaging system 10 according to this embodiment. In this operation, the user establishes a wireless connection with the flashlight illumination apparatus 400 and the steady-light illumination apparatus 500 using the sender illumination apparatus 300 connected to the camera body 100. At this time, the sender illumination apparatus 300 performs processing such as the light emission amount settings of the flashlight illumination apparatus 400 and steady-light illumination apparatus 500 assigned to each group.

Referring now to Fig. 4, a description will be given of processing of the sender illumination apparatus 300 in the wireless setting. Fig. 4 is a flowchart illustrating the processing of the sender illumination apparatus 300.

In step S100, when the power switch of the illumination-apparatus operation unit 303 is turned on and the illumination apparatus becomes operable, the illumination-apparatus control unit 301 initializes memories and ports. The illumination-apparatus control unit 301 also reads the switch status input from the illumination-apparatus operation unit 303 and previously set input information, and performs a variety of settings regarding the light emission, such as the light emission mode (such as dimming or manual light emission), and the setting of the light emission value for the illumination apparatus.

Next, in step S101, the illumination-apparatus control unit 301 performs charging operation processing to store the charges for light emission in a main capacitor (not illustrated) from a power supply unit (not illustrated) using a charging control unit.

Next, in step S102, the illumination-apparatus control unit 301 detects the voltage of the charges stored in the main capacitor (not illustrated) and determines whether the main capacitor is in a charging completion state. In a case where the main capacitor is in the charging completion state, the flow proceeds to step S103. On the other hand, in a case where the main capacitor is not in the charging completion state, the flow returns to step S101, and the illumination-apparatus control unit 301 continues the charging operation. In a case where the main capacitor is in the charging completion state, the flashlight emitter 305 is ready to emit light.

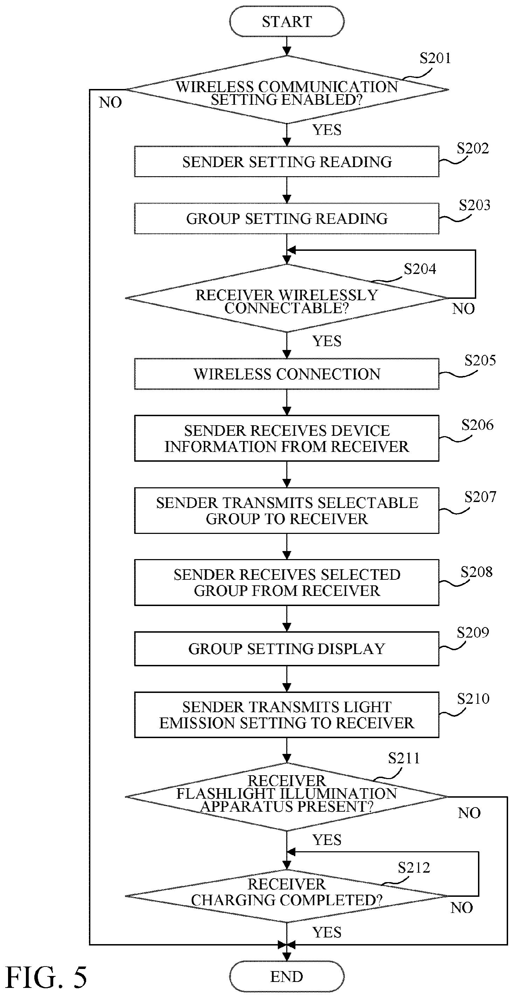

In step S103, the illumination-apparatus control unit 301 performs processing related to wireless communication (wireless communication processing). Details of step S103 will be described later with reference to Fig. 5.

Next, in step S104, the illumination-apparatus control unit 301 determines whether the illumination-apparatus shoe 306 is connected to the camera ACC shoe 108 (whether it is connected to the camera body 100). In a case where it is connected to the camera body 100, the flow proceeds to step S105. On the other hand, in a case where it is not connected to the camera body 100, the flow returns to step S101 and continues checking the charging and wireless connection state in steps S101 to S104.

In step S105, in a case where the illumination-apparatus control unit 301 is connected to the camera body 100 and the sender illumination apparatus 300 is in the charging completion state and able to emit light, the illumination-apparatus control unit 301 transmits the charging completion state to the camera body 100 via communication with the illumination-apparatus shoe 306. In a case where the flashlight illumination apparatus 400 is wirelessly connected in step S103, in a charging completion state, and able to emit light, the sender illumination apparatus 300 that has received the charging completion state from the flashlight illumination apparatus 400 via the wireless communication transmits it to the camera body 100. Thereby, this flow ends. The sender illumination apparatus 300 then waits for a light emission instruction from the camera body 100, and continues processing steps S101 to S105 until a light emission instruction is issued.

Next, the wireless communication processing of step S103 performed by the sender illumination apparatus 300 will be described in detail with reference to Fig. 5. Fig. 5 is a flowchart illustrating the wireless communication processing of the sender illumination apparatus 300.

First, in step S201, the illumination-apparatus control unit 301 determines whether the setting for wireless communication is enabled (whether or not the wireless communication setting is enabled). In a case where the user has enabled the wireless communication setting using the illumination-apparatus operation unit 303 (in a case where wireless communication setting is enabled on the illumination-apparatus operation unit 303), the flow proceeds to step S202. On the other hand, in a case where wireless communication setting is not enabled, this flow ends.

In step S202, the illumination-apparatus control unit 301 performs a sender setting as the wireless communication setting previously set by the user using the illumination-apparatus operation unit 303 or illumination-apparatus display unit 304. This step reads out the device sender setting and the display screen in a case where the user has set the sender illumination apparatus 300, which mainly transmits a wireless light emission control signal, etc. In order to perform wireless communication using the illumination-apparatus wireless communication unit 302, the illumination-apparatus control unit 301 sets connection information such as the wireless ID and channel (CH) for wireless communication, and sets the display of the sender illumination apparatus 300, etc. Once the sender illumination apparatus 300 is set as a sender in step S202, the sender illumination apparatus 300 serves as an illumination apparatus that controls a plurality of wirelessly connected receiver illumination apparatuses in the imaging system 10.

Next, in step S203, the illumination-apparatus control unit 301 automatically sets the emission group of the sender illumination apparatus 300 to group A. This embodiment automatically sets the group of the sender illumination apparatus 300 to group A, but the user may arbitrarily set it to another group such as group B or C, or may set the sender illumination apparatus 300 to prohibit it from emitting light.

Next, in step S204, the illumination-apparatus control unit 301 searches for a receiver illumination apparatus that is set as a receiver and is connectable with the same ID and CH, based on the wireless ID and CH set in step S202. In a case where a receiver illumination apparatus is found (in a case where the receiver illumination apparatus is wirelessly connectable), the flow proceeds to step S205. On the other hand, in a case where a receiver illumination apparatus is not found, the search for a wirelessly connectable receiver illumination apparatus continues in step S204.

In step S205, the illumination-apparatus control unit 301 establishes a wireless connection with the variety of illumination apparatuses set as receivers found in step S204.

Next, in step S206, the illumination-apparatus control unit 301 acquires information transmitted from the receiver illumination apparatus in step S307 or step S405 (described below) during wireless connection. The information acquired here includes the type of device, such as the flashlight illumination apparatus 400 or steady-light illumination apparatus 500, an ID (identification information) unique to the device, and settable items according to the type of device. For example, in a case where the wirelessly connected device is the flashlight illumination apparatus 400, settable items such as the maximum light emission amount and zoom position are acquired. On the other hand, in a case where the wirelessly connected device is the steady-light illumination apparatus 500, settable items such as the maximum light emission amount, color temperature setting range, and color setting range are acquired.

Next, in step S207, the illumination-apparatus control unit 301 transmits to the receiver illumination apparatus a wireless group selectable from groups A to E according to the type of flashlight illumination apparatus 400 or steady-light illumination apparatus 500 wirelessly connected and transmitted in steps S205 and S206. In this embodiment, group A is used by the sender illumination apparatus 300 that emits flashlight. Thus, communication is performed with the wirelessly connected flashlight illumination apparatus 400 with groups A to E being selectable. On the other hand, communication is performed with the steady-light illumination apparatus 500 with groups B to E selectable. This embodiment can make five groups A, B, C, D, and E selectable, but another number of groups such as three or ten groups may also be used.

Next, in step S208, the illumination-apparatus control unit 301 receives the group selection result transmitted by each receiver illumination apparatus in steps S311 and S409 described below based on the selectable group transmitted from the sender illumination apparatus 300 in step S207.

Next, in step S209, the illumination-apparatus control unit 301 displays the setting of each assigned group on the illumination-apparatus display unit 304 based on the group selection result in step S208. Fig. 8 is an external view of the screen display of the wireless setting of the sender illumination apparatus 300, and illustrates the state of the illumination-apparatus display unit 304 in the group selection mode with the wireless communication setting of the sender illumination apparatus 300.

As illustrated in Fig. 8, for example, in a case where multiple flashlight illumination apparatuses 400 are set to groups A and B, the flashlight emission mode (ETTL or M), light emission amount setting (1/64 or ±0), and charging completion (thunder mark) are set and displayed for groups A and B. Similarly, in a case where the steady-light illumination apparatus 500 is set to group C, as illustrated in Fig. 8, the steady light emission setting, such as light emission amount (50%), color temperature (5000K), color setting (COLOR_OFF), and emission ON/OFF (light symbol), are set and displayed.

Next, in step S210, the illumination-apparatus control unit 301 transmits the light emission setting to each receiver illumination apparatus. Here, the light emission setting for each group stored in the illumination-apparatus control unit 301 is transmitted to the illumination apparatus belonging to each group. Thereby, the same setting value is applied to illumination apparatuses belonging to the same group.

Next, in step S211, the illumination-apparatus control unit 301 determines whether the flashlight illumination apparatus 400 is included in the illumination apparatuses connected as receivers. In a case where the flashlight illumination apparatus 400 is wirelessly connected, the flow proceeds to step S212. On the other hand, in a case where the flashlight illumination apparatus 400 is not wirelessly connected, this flow ends.

In step S212, the illumination-apparatus control unit 301 performs wireless communication using the illumination-apparatus wireless communication unit 302 to receive information on whether the flashlight illumination apparatus 400, which is the receiver illumination apparatus, is in the charging completion state and can emit light. In a case where charging completion information is transmitted from the receiver flashlight illumination apparatus 400 in step S314 (described below), the charging completion information can be received. The illumination-apparatus control unit 301 then determines whether the receiver flashlight illumination apparatus 400 is fully charged. In a case where charging has been completed, this flow ends. On the other hand, in a case where charging has not yet been completed, the reception of charging completion information from the receiver flashlight illumination apparatus 400 in step S212 continues.

In a case where multiple flashlight illumination apparatuses 400 are connected, the illumination-apparatus control unit 301 determines whether all of the receiver illumination apparatuses are in the charging completion states. In connecting the multiple receiver illumination apparatuses to the sender illumination apparatus 300, steps S204 to S210 are repeated in the same way to perform connection processing with each receiver illumination apparatus.

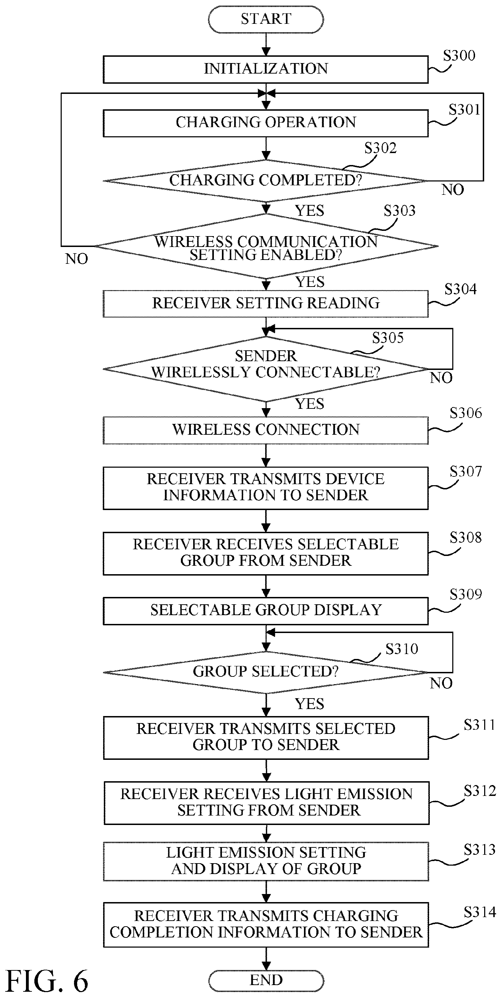

Referring now to Fig. 6, a description will be given of processing of the flashlight illumination apparatus 400, which is the receiver illumination apparatus, in the wireless setting. Fig. 6 is a flowchart illustrating the processing of the flashlight illumination apparatus 400. Here, the flashlight illumination apparatus 400 will be described in a case where the illumination-apparatus shoe 406 is not connected to the camera body 100.

First, in step S300, similarly to step S100, when the power switch in the illumination-apparatus operation unit 403 of the flashlight illumination apparatus 400 is turned on and becomes activated, the illumination-apparatus control unit 401 initializes memories and ports. The illumination-apparatus control unit 401 also reads the switch status and previously set input information from the illumination-apparatus operation unit 403, and performs a variety of settings regarding the light emission such as the light emission mode (such as dimming or manual light emission), and the setting of the light emission value for the illumination apparatus.

Next, in step S301, the illumination-apparatus control unit 401 performs charging operation processing to store the charges for light emission in a main capacitor (not illustrated) from a power supply unit (not illustrated) using a charging control unit.

Next, in step S302, the illumination-apparatus control unit 401 detects the voltage of the charges stored in the main capacitor (not illustrated) and determines whether the main capacitor is in a charging completion state. In a case where the main capacitor is in the charging completion state, the flashlight emitter 405 is ready to emit light.

In step S303, the illumination-apparatus control unit 401 determines whether the wireless communication setting is enabled. In a case where the user has enabled the wireless communication setting using the illumination-apparatus operation unit 403, the flow proceeds to step S304. On the other hand, in a case where the wireless communication setting is not enabled, the flow returns to step S301 and the charging operation and detection of charging completion are continued.

In step S304, the illumination-apparatus control unit 401 reads the receiver setting from its internal memory, in a case where the user has previously set the receiver setting using the illumination-apparatus operation unit 403 or illumination-apparatus display unit 404. In order to perform wireless communication using the illumination-apparatus wireless communication unit 402, the illumination-apparatus control unit 401 sets connection information such as the wireless ID and CH for wireless communication, and sets the unit as a receiver illumination apparatus. In a case where the flashlight illumination apparatus 400 is set as the receiver illumination apparatus in step S304, the flashlight illumination apparatus 400 becomes an illumination apparatus that emits light in accordance with a light emission instruction from the sender illumination apparatus 300 wirelessly connected in the imaging system 10.

In step S305, the illumination-apparatus control unit 401 searches for a connectable sender illumination apparatus with the same ID and CH based on the wireless ID and CH set in step S304. In a case where a wirelessly connectable sender illumination apparatus 300 is found, the flow proceeds to step S306. On the other hand, in a case where a wirelessly connectable sender illumination apparatus 300 is not found, the flow continues searching for a wirelessly connectable sender illumination apparatus 300.

In step S306, the illumination-apparatus control unit 401 establishes a wireless connection with the sender illumination apparatus found and set as the sender in step S305, using the illumination-apparatus wireless communication unit 402.

Next, in step S307, the illumination-apparatus control unit 401 transmits to the sender illumination apparatus 300, using the illumination-apparatus wireless communication unit 402, the type of receiver illumination apparatus, an illumination apparatus ID unique to the device, and settable items such as the maximum light emission amount and zoom position. Here, the illumination-apparatus control unit 401 also transmits information that the illumination apparatus 400 is a flashlight illumination apparatus that emits flashlight.

Next, in step S308, the illumination-apparatus control unit 401 receives the selectable group transmitted from the sender illumination apparatus 300 in step S207, using the illumination-apparatus wireless communication unit 402. Here, the selectable group is set for the flashlight illumination apparatus 400, so unless the steady-light illumination apparatus 500 is first connected, five groups A to E are transmitted as selectable groups. For example, in a case where the steady-light illumination apparatus 500 has been first connected wirelessly and set to group C, the selectable group for the flashlight illumination apparatus 400 becomes groups A, B, D, and E.

Next, in step S309, the illumination-apparatus control unit 401 displays the selectable groups received in step S308 on the illumination-apparatus display unit 404.

Next, in step S310, the illumination-apparatus control unit 401 determines whether the user has selected a group from the selectable groups using the illumination-apparatus operation unit 403 or the illumination-apparatus display unit 404. In a case where a group has been selected, the flow proceeds to step S311. On the other hand, in a case where a group has not been selected, the flow continues with determining whether or not a group has been selected. Although the group determination processing continues until the user makes the selection, the group may be automatically assigned to an available group after a predetermined time has elapsed and the flow proceeds to the next step.

In step S311, the illumination-apparatus control unit 401 transmits the result of the selected group to the sender illumination apparatus 300 based on the group selection result made in step S310. Next, in step S312, the illumination-apparatus control unit 401 receives a light emission setting from the sender illumination apparatus 300 using the illumination-apparatus wireless communication unit 402. In this embodiment, the flashlight illumination apparatus 400 receives a setting regarding the light emission (light emission settings) such as a light emission mode or a light emission amount. Next, in step S313, the illumination-apparatus control unit 401 makes a setting regarding the light emission such as the light emission mode or light emission amount for the flashlight illumination apparatus 400 based on the light emission setting received in step S312, and displays the group setting on the illumination-apparatus display unit 404.

Next, in step S314, the illumination-apparatus control unit 401, having determined the charging completion state and the wireless connection state in steps S302 and S306, performs wireless communication using the illumination-apparatus wireless communication unit 402 and notifies the sender illumination apparatus 300 of the charging completion state. Thereby, this flow ends. The sender illumination apparatus 300 receives the charging completion information on the flashlight illumination apparatus 400 in step S212. After the processing operation ends, the illumination-apparatus control unit 401 in the flashlight illumination apparatus 400 waits for an instruction to emit light from the sender illumination apparatus 300 while performing the charging operation as in step S301.

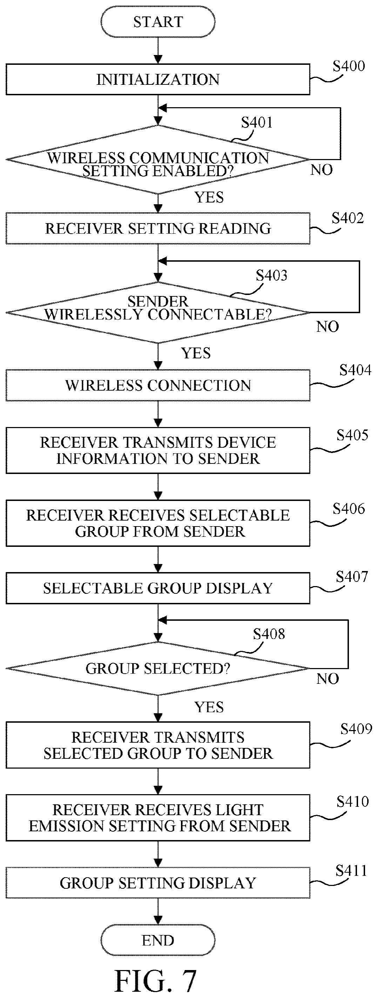

Referring now to Fig. 7, a description will be given of processing of the steady-light illumination apparatus 500, which is the receiver illumination apparatus, in the wireless setting. Fig. 7 is a flowchart illustrating the processing of the steady-light illumination apparatus 500. Here, the steady-light illumination apparatus 500 will be described in a case where the illumination-apparatus shoe 506 is not connected to the camera body 100. A description of a processing operation similar to that of the flashlight illumination apparatus 400 described with reference to Fig. 6 will be omitted, and only differences will be described. More specifically, steps S400 to S404 are similar to steps S300 and S303 to S306, respectively, and therefore a description thereof will be omitted.

In step S405, the illumination-apparatus control unit 501 transmits to the sender illumination apparatus 300 using the illumination-apparatus wireless communication unit 502 the type of receiver illumination apparatus, the illumination apparatus ID unique to the device, and the settable items such as a maximum light emission amount, color temperature, or color. The illumination-apparatus control unit 501 also transmits information that it is the steady-light illumination apparatus 500 configured to emit steady light.

Next, in step S406, the illumination-apparatus control unit 501 receives the selectable group from the sender illumination apparatus 300 in step S207, using the illumination-apparatus wireless communication unit 502. Here, since it is a selectable group for the steady-light illumination apparatus 500, unless the flashlight illumination apparatus 400 is not first connected, the sender illumination apparatus 300 is set to group A. Therefore, four groups, groups B to E, are transmitted as the selectable group.

Next, in step S407, the illumination-apparatus control unit 501 displays the selectable group received in step S406 on the illumination-apparatus display unit 504.

Next, in step S408, the illumination-apparatus control unit 501 determines whether the user has selected a group from the selectable group using the illumination-apparatus operation unit 503 and the illumination-apparatus display unit 504. In a case where a group has been selected, the flow proceeds to step S409. On the other hand, in a case where a group has not been selected, the flow continues with determining whether or not a group has been selected.

In step S409, the illumination-apparatus control unit 501 transmits the selected group to the sender illumination apparatus 300 based on the group selection result in step S408. Next, in step S410, the illumination-apparatus control unit 501 receives a light emission setting from the sender illumination apparatus 300 using the illumination-apparatus wireless communication unit 502. Here, the illumination-apparatus control unit 501 receives a setting such as the light emission mode, light emission amount, color temperature, or color for the steady-light illumination apparatus 500.

Next, in step S411, the illumination-apparatus control unit 501 makes a setting regarding light emission such as the light emission mode, light emission amount, color temperature, or color for the steady-light illumination apparatus 500 based on the light emission setting received in step S410. The illumination-apparatus control unit 501 also displays the group setting on the illumination-apparatus display unit 504, and this flow ends. Here, after processing ends, the illumination-apparatus control unit 501 in the steady-light illumination apparatus 500 enters a standby state, waiting for a light emission instruction from the sender illumination apparatus 300.

As described above, in this embodiment, the communication unit (illumination-apparatus wireless communication unit 302) communicates wirelessly with each of the first illumination apparatus (flashlight illumination apparatus 400) and the second illumination apparatus (steady-light illumination apparatus 500). The control unit (illumination-apparatus control unit 301) determines the setting regarding the light emission for each of the first illumination apparatus and the second illumination apparatus. Here, the control unit may make different the setting for the first illumination apparatus and the setting for the second illumination apparatus (changing the light emission setting according to the illumination apparatus that is wirelessly connected).

The control unit may determine the setting for the first illumination apparatus or the second illumination apparatus according to whether the first illumination apparatus or the second illumination apparatus is wirelessly connected via the communication unit. The first illumination apparatus and the second illumination apparatus may belong to different groups, and the control unit may determine the setting regarding the light emission for each group. The setting regarding the light emission may include a setting regarding at least one of the group to which the light emission belongs, the light emission amount, the light emission mode, the color temperature, and the color.

The control apparatus (sender illumination apparatus 300) may have a display unit (illumination-apparatus display unit 304) for displaying information on the setting. The display unit may display different information on the settings of the first and second illumination apparatuses. The first and second illumination apparatuses may belong to different groups, and the display unit may change the information on the settings according to the group.

In this embodiment, the sender illumination apparatus 300 determines the selectable group and transmits information to each receiver illumination apparatus for each group, but this embodiment is not limited to this example. In this embodiment, the sender illumination apparatus 300 may transmit information assigned to each group, and the receiver illumination apparatus may make the determination. In this embodiment, the sender illumination apparatus 300 is an illumination apparatus capable of emitting flashlight but may be a wireless communication device that only controls the light emission of the receiver illumination apparatus through wireless control communication without any light emission function. In that case, since the wireless communication device serving as the sender does not belong to any group, the steady-light illumination apparatus 500 may operate to select group A.

In this embodiment, the user is allowed to select different selectable groups according to whether the flashlight illumination apparatus 400 or the steady-light illumination apparatus 500 is wirelessly connected, so as to perform settings and displays regarding the light emission for each group. Thereby, this embodiment can provide an imaging system that allows a proper setting to be made according to the type of illumination apparatus.

### SECOND EMBODIMENT

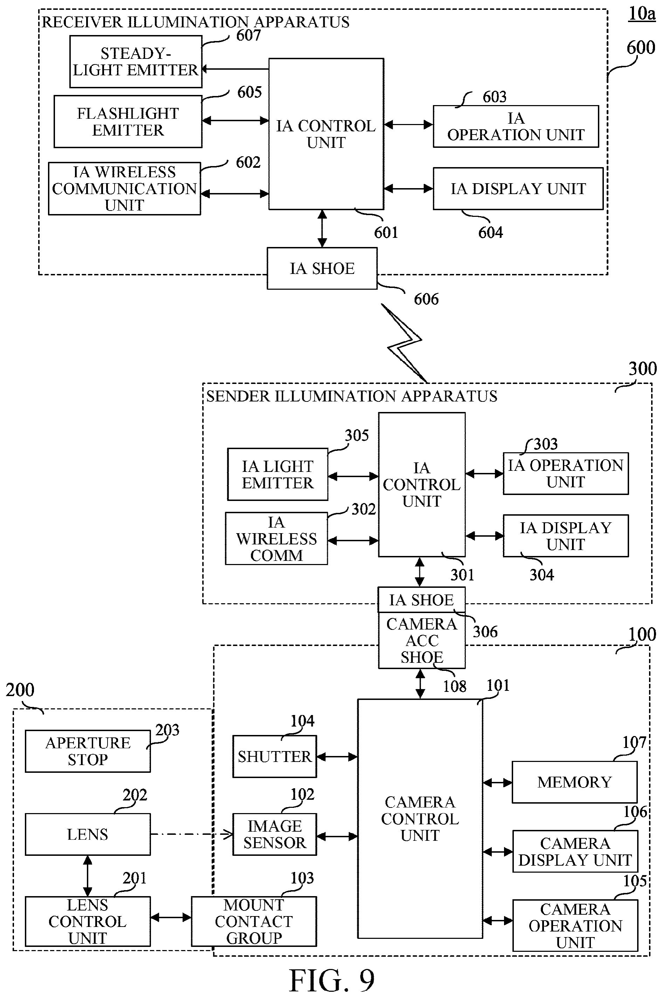

Referring now to Figs. 9 to 11, a description will be given of an imaging system (multi-lamp illumination control system, illumination system) 10a according to a second embodiment of the disclosure. This embodiment will discuss processing with a receiver illumination apparatus (third illumination apparatus) 600 is an illumination apparatus having both a flashlight emitter (first illumination unit) and a steady-light emitter (second illumination unit).

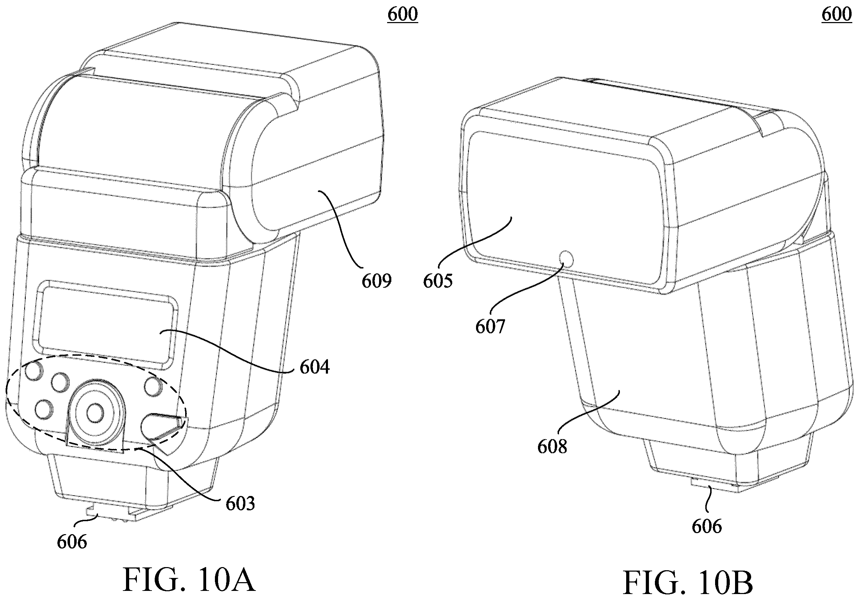

Fig. 9 is a block diagram of the imaging system 10a. The imaging system 10a includes a camera body 100, a lens apparatus 200, a sender illumination apparatus (control apparatus) 300, and a receiver illumination apparatus 600. In the imaging system 10a, the camera body 100, the lens apparatus 200, and the sender illumination apparatus 300 are the same as those in the imaging system 10 according to the first embodiment in Fig. 2, and therefore a description thereof will be omitted. Figs. 10A and 10B are external views of the receiver illumination apparatus 600. Fig. 10A is a rear perspective view, and Fig. 10B is a front perspective view.

Reference numeral 607 denotes a steady-light emitter (second illumination unit) and includes an LED and modeling lens (not illustrated). As illustrated in Fig. 10B, the steady-light emitter 607 is located in the same place as the flashlight emitter (first illumination unit) 605. Therefore, the illumination range of the steady-light emitter 607 is approximately the same as the illumination range of the flashlight emitter 605. The illumination center is located near the illumination center of the flashlight emitter 605. In a case where a large light amount is not required or an object is to be irradiated with light of a different color or color temperature, the user can operate the illumination-apparatus operation unit 603 to switch from the light emitted by the flashlight emitter 605 (first illumination) to the light emitted by the steady-light emitter 607 (second illumination). Thereby, the LED can be switched on and off under control of the illumination-apparatus control unit 301. In this embodiment, at least one of the illumination-apparatus operation unit 603 and the illumination-apparatus display unit 604 may also function as a selector.

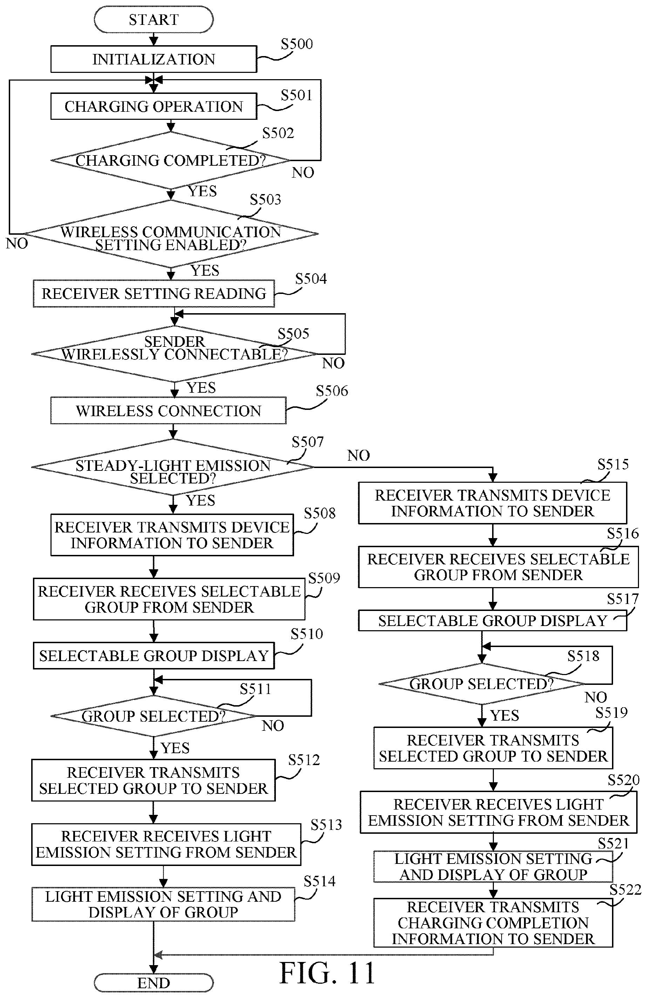

Fig. 11 is a flowchart illustrating processing of the receiver illumination apparatus 600. The initialization, wireless communication, and other processing performed by the sender illumination apparatus 300 are similar to those in Figs. 4 and 5, and thus a description thereof will be omitted. Steps S500 to S506 and S516 to S522 in Fig. 11 are similar to steps S300 to S306 and S308 to S314 in Fig. 6, respectively, and thus a description thereof will be omitted. Steps S509 to S514 in Fig. 11 are similar to steps S406 to S411 in Fig. 7, and thus a description thereof will be omitted. Steps S507, S508, and S515 in Fig. 11 will be discussed below as processing of this embodiment that differs from the first embodiment.

In step S507, after the wireless connection is established in step S506, the illumination-apparatus control unit 601 displays a screen (selection screen) on the illumination-apparatus display unit 604 to prompt the user to select whether or not to emit steady light during imaging. The illumination-apparatus control unit 601 then determines whether or not the user has selected to emit steady light using the illumination-apparatus operation unit 603. In a case where steady light emission is selected, the flow proceeds to step S508. On the other hand, in a case where steady light emission is not selected, the flow proceeds to step S515.

In step S508, the illumination-apparatus control unit 601 transmits the type of receiver illumination apparatus, the illumination apparatus ID unique to the device, and the settable items such as a maximum light emission amount, color temperature, and color to the sender illumination apparatus 300, using the illumination-apparatus wireless communication unit 602. Here, the illumination-apparatus control unit 601 transmits to the sender illumination apparatus 300 that it is an illumination apparatus configured to emit steady light. The sender illumination apparatus 300 receives device information from the receiver illumination apparatus 600 in step S206 of Fig. 5 described above, and as a result of communication as a steady-light illumination apparatus, transmits a selectable group of steady-light illumination apparatuses in step S207.

In step S515, the illumination-apparatus control unit 601 transmits to the sender illumination apparatus 300 using the illumination-apparatus wireless communication unit 602 the type of receiver illumination apparatus, an illumination apparatus ID unique to the device, and settable items such as a maximum light emission amount and zoom position. Here, the illumination-apparatus control unit 601 transmits to the sender illumination apparatus 300 that it is an illumination apparatus configured to emit flashlight. The sender illumination apparatus 300 receives device information from the receiver illumination apparatus 600 in step S206 of Fig. 5 described above, and as a result of communication as a flashlight illumination apparatus, transmits a selectable group of flashlight illumination apparatuses in step S207.

As described above, in this embodiment, the communication unit (illumination-apparatus wireless communication unit 302) wirelessly communicates with the third illumination apparatus (receiver illumination apparatus 600) capable of performing the first illumination and the second illumination. The control unit (illumination-apparatus control unit 301) determines the setting regarding the first illumination and the setting regarding the second illumination of the third illumination apparatus. Here, the control unit may make a difference the setting for the first illumination and the setting for the second illumination. The control unit may determine the setting for the first illumination or the setting for the second illumination according to whether the first illumination or the second illumination is selected by the third illumination apparatus. The first illumination may be illumination using flashlight, and the second illumination may be illumination using steady light.

Thus, in this embodiment, in a case where the receiver illumination apparatus 600 includes both a flashlight emitter and a steady-light emitter, the user is prompted to select whether to use flashlight or steady light for the illumination during imaging before selecting a group. This embodiment thus enables group selection according to the selection result of the flashlight emission or steady-light emission, providing an imaging system that allows for a proper illumination setting.

### THIRD EMBODIMENT

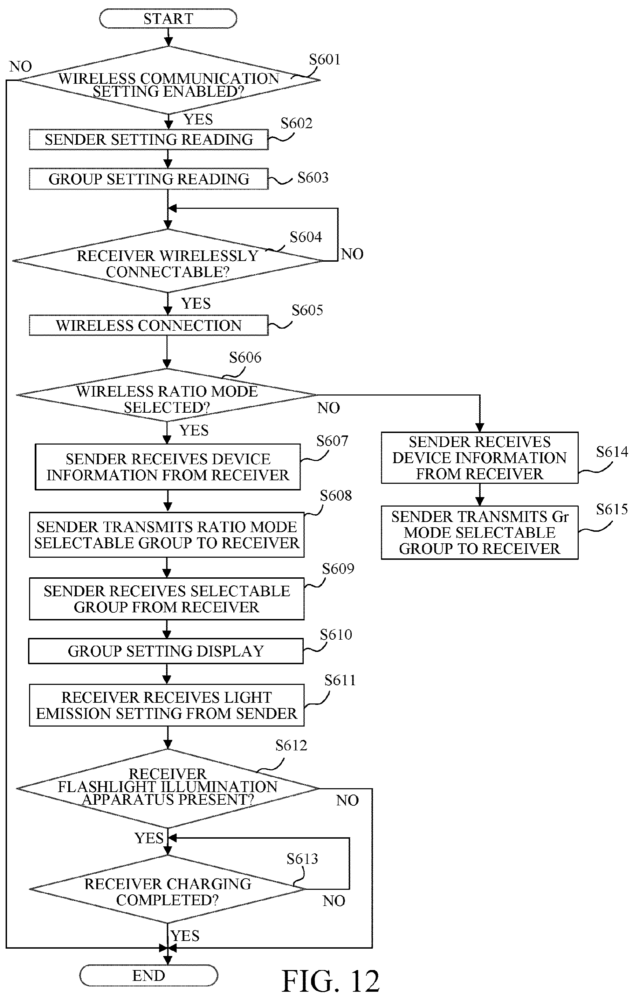

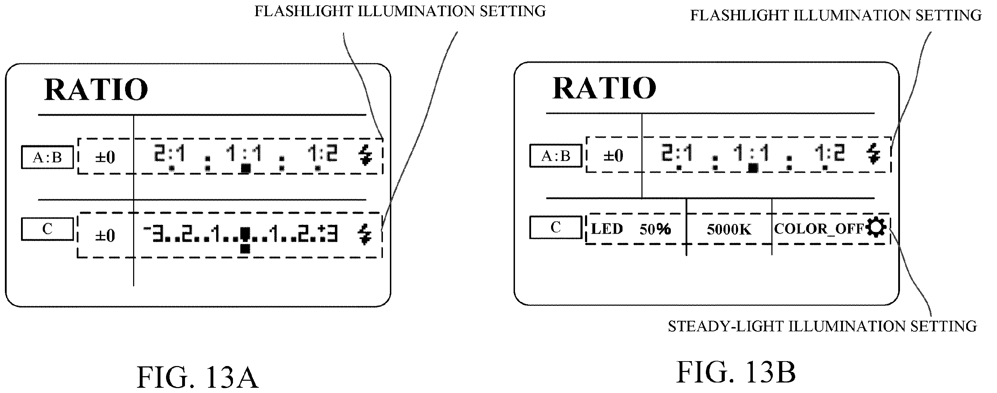

Referring now to Figs. 12, 13A, and 13B, a description will be given of an imaging system (multi-lamp illumination control system) according to a third embodiment of the disclosure. This embodiment will discuss processing of controlling a selectable group according to the light emission mode and type of illumination apparatus. This embodiment will discuss the processing executed by the imaging system 10 similar to that of the first embodiment. As with the first embodiment, the processing of each of the sender illumination apparatus 300, flashlight illumination apparatus 400, and steady-light illumination apparatus 500 is similar to that illustrated in Figs. 4, 6, and 7, and thus a description will be omitted.

Fig. 12 is a flowchart illustrating wireless communication processing (step S103 in Fig. 4) performed by the illumination-apparatus control unit 301 in the sender illumination apparatus 300 according to this embodiment. Steps S601 to S605 and S609 to S613 in Fig. 12 are similar to steps S201 to S205 and S208 to S212 in Fig. 5, respectively, and thus a description thereof will be omitted. Figs. 13A and 13B are external views of the wireless setting screen display (wireless setting of the sender illumination-apparatus) of the sender illumination apparatus 300 according to this embodiment.

In step S606 in Fig. 12, the illumination-apparatus control unit 301 determines whether a ratio (light emission ratio) mode (first light emission processing) has been selected as the wireless mode selection. In a case where the user has selected the ratio mode by selecting a mode on the illumination-apparatus operation unit 303 or the illumination-apparatus display unit 304 of the sender illumination apparatus 300, the flow proceeds to step S607. On the other hand, in a case where the ratio mode has not been selected, it is assumed that Gr (group) mode (second light emission processing) has been selected, and the flow proceeds to step S614.

In step S607, the illumination-apparatus control unit 301 acquires the device information from the receiver illumination apparatus using the illumination-apparatus wireless communication unit 302. Here, as in step S206, the illumination-apparatus control unit 301 receives from the receiver illumination apparatus the type of each device, its unique device ID, and a variety of setting items transmitted in step S307 of Fig. 6 or step S405 of Fig. 7.

In step S608, the illumination-apparatus control unit 301 transmits the selectable group to the receiver illumination apparatus as a state of the ratio mode selection. Here, in a mode as the ratio mode, as illustrated in Figs. 13A and 13B, a ratio of the light emission amounts of groups A and B is determined and the light emission amount is displayed as an "A:B" ratio. This mode is a light emission mode in which three groups are set as a group in which the light emission amount of group C is set independently in addition to the light emission amount ratio of A:B. A group (Gr) mode is a mode in which the light emission amount of each of the five groups A to E described in the first embodiment can be set individually.

In step S607, in a case where the receiver illumination apparatus transmits as the flashlight illumination apparatus 400, the sender illumination apparatus 300 belongs to group A. Therefore, the receiver illumination apparatus transmits groups A, B, and C to the flashlight illumination apparatus 400 as selectable groups. Then, in step S609, the receiver illumination apparatus transmits group C as the group selected by the flashlight illumination apparatus 400. At this time, in step S610, as illustrated in Fig. 13A, the flashlight illumination setting for groups A, B, and C is displayed on the illumination-apparatus display unit 304 in the sender illumination apparatus 300.

On the other hand, in step S607, in a case where the receiver illumination apparatus transmits as the steady-light illumination apparatus 500, the sender illumination apparatus 300 that emits the flashlight belongs to group A. Thus, group A and group B for emitting light by determining a light emission amount ratio are treated as groups that can be selected by an illumination apparatus that emits the same flashlight, and group C is transmitted to the steady-light illumination apparatus 500 as a selectable group. Thereafter, in step S609, group C is transmitted from the receiver illumination apparatus as a group for which the steady-light illumination apparatus 500 has been selected. At this time, as illustrated in Fig. 13B, in step S610, the illumination-apparatus display unit 304 in the sender illumination apparatus 300 displays a light emission setting at a light emission amount ratio using the flashlight illumination apparatus 400 for groups A and B, and an steady-light illumination setting for group C.

In a case where step S606 moves to step S614, the illumination-apparatus control unit 301 receives the type of device, ID unique to the device, and a variety of setting items for each device from the receiver illumination apparatus, as in step S607.

In step S615, the illumination-apparatus control unit 301 transmits the selectable group to the receiver illumination apparatus as the selection status of Gr mode. As in step S207, the selectable group in the Gr mode is a group selected from the five groups A to E so that the flashlight illumination apparatus 400 and the steady-light illumination apparatus 500 do not belong to the same group.

In this embodiment, the control unit performs either the first light emission processing or the second light emission processing in accordance with the user's selection. The first light emission processing is light emission processing at a light emission amount ratio determined for each of a plurality of illumination apparatuses including either the first illumination apparatus or the second illumination apparatus. The second light emission processing is light emission processing at a light emission amount determined individually for each of a plurality of illumination apparatuses. In this embodiment, in a case where the wireless light emission method is the ratio (light emission amount ratio) mode, the group that emits light at the light emission amount ratio is set to the flashlight illumination apparatus 400. This configuration can provide an imaging system that can avoid an improper light emission ratio due to different types of illumination apparatus, such as the flashlight illumination apparatus 400 and the steady-light illumination apparatus 500.

This embodiment has discussed the flow for selecting a group on the receiver side. However, in steps S607 and S608, groups A and B are treated as a group for the flashlight illumination apparatus 400. Thus, in a case where a communication as the steady-light illumination apparatus 500 is sent in step S607, step S608 may be skipped and the steady-light illumination apparatus 500 may be automatically assigned to group C.

In this embodiment, three groups, A, B, and C are selectable, but five groups, including groups D and E, may also be selectable. In this embodiment, since the sender illumination apparatus 300 uses group A as the illumination apparatus that emits flashlight, group B is also treated as a group for which the flashlight illumination apparatus 400 can be selected. However, the steady-light illumination apparatus 500 may also select groups A and B.

### FOURTH EMBODIMENT

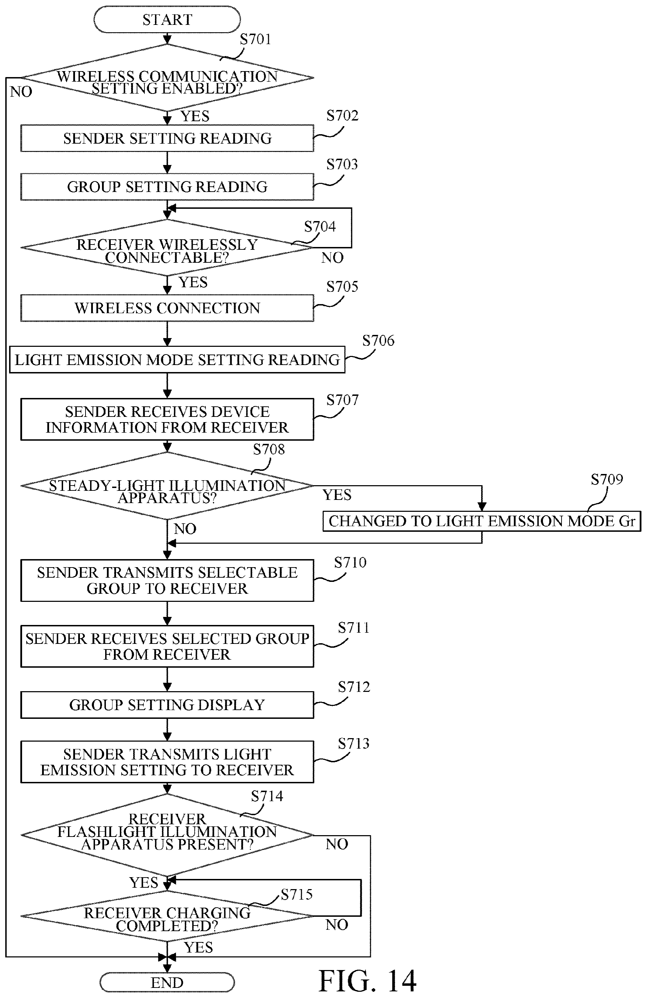

Referring now to Fig. 14, a description will be given of an imaging system (multi-lamp illumination control system) according to a fourth embodiment of the disclosure. This embodiment will discuss processing of controlling a light emission mode of illumination using a wireless connection according to the type of illumination apparatus. This embodiment will discuss the processing executed by the same imaging system 10 as in the first embodiment. As with the first embodiment, the processing of the sender illumination apparatus 300, flashlight illumination apparatus 400, and steady-light illumination apparatus 500 is similar to that illustrated in Figs. 4, 6, and 7, and thus a description will be omitted.

Fig. 14 is a flowchart illustrating wireless communication processing (step S103 in Fig. 4) performed by the illumination-apparatus control unit 301 in the sender illumination apparatus 300 according to this embodiment. Steps S701 to S705, S707, and S710 to S715 in Fig. 14 are similar to steps S201 to S212 in Fig. 5, respectively, and thus a description thereof will be omitted.

In step S706, the illumination-apparatus control unit 301 reads the setting of the emission group selected by the user on the illumination-apparatus operation unit 303 or illumination-apparatus display unit 304. Here, the selected light emission mode is either the ratio (light emission amount ratio) mode (first light emission processing) that determines the light emission amount ratio between group A and group B, or the Gr (group) mode (second light emission processing) that determines the light emission amount for each group individually, as in the third embodiment.

In step S708, the illumination-apparatus control unit 301 determines whether the type of illumination apparatus received as device information from the receiver illumination apparatus in step S707 is the steady-light illumination apparatus 500. In a case where the steady-light illumination apparatus 500 is wirelessly connected as the receiver illumination apparatus, the flow proceeds to step S709. On the other hand, in a case where the steady-light illumination apparatus 500 is not wirelessly connected, it is determined that the flashlight illumination apparatus 400 is wirelessly connected, and the flow proceeds to step S710.

In step S709, in a case where the light emission mode read in step S706 is a ratio mode, the illumination-apparatus control unit 301 changes the light emission mode to the Gr mode. On the other hand, in a case where the light emission mode is set to Gr mode, the processing of step S709 ends without doing anything, and the flow proceeds to step S710.

In this embodiment, the illumination-apparatus control unit 301 performs the second light emission processing in a case where the user selects the first light emission processing and the steady-light illumination apparatus 500 is wirelessly connected. That is, in this embodiment, in a case where the receiver illumination apparatus includes the steady-light illumination apparatus 500, the light emission mode is automatically changed to the Gr mode. This configuration can perform imaging in a proper light emission mode in a case where the steady-light illumination apparatus 500 is a receiver illumination apparatus and the light emission amount emitted in the ratio mode is insufficient for imaging at a proper light emission ratio.

In this embodiment, after the light emission mode is set, the light emission mode is automatically changed to the Gr mode based on the result of obtaining the device information on the wirelessly connected receiver illumination apparatus, but the light emission mode may also be selected after the device information about the receiver illumination apparatus is acquired. By first selecting ratio mode as the light emission mode, the steady-light illumination apparatus 500 may be set so that it cannot be wirelessly connected as a receiver illumination apparatus.

### FIFTH EMBODIMENT

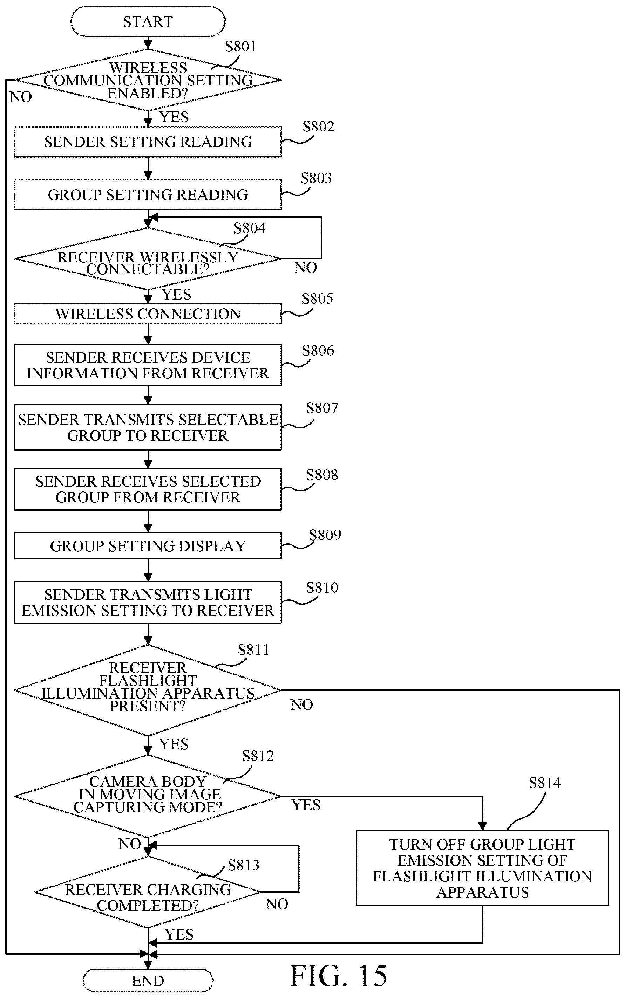

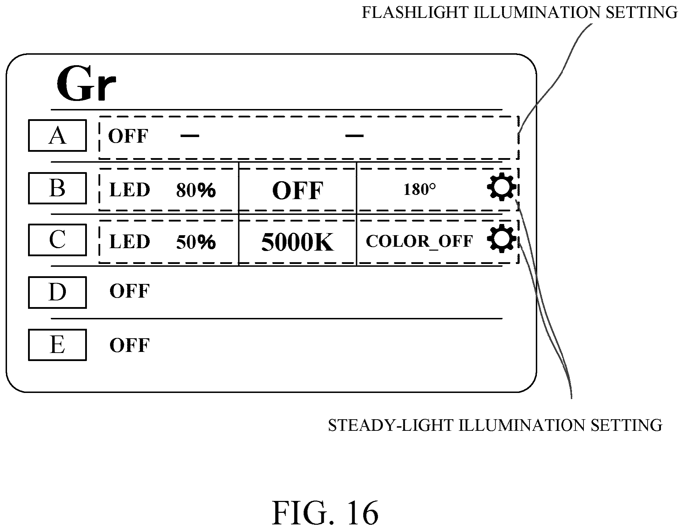

Referring now to Figs. 15 and 16, a description will be given of an imaging system (multi-lamp illumination control system) according to a fifth embodiment of the disclosure. This embodiment will discuss processing for controlling the light emission of illumination for a wireless connection according to the imaging mode of the camera body 100 and the type of illumination apparatus. This embodiment will discuss processing executed by an imaging system 10 similar to that of the first embodiment. As with the first embodiment, the processing of the sender illumination apparatus 300, flashlight illumination apparatus 400, and steady-light illumination apparatus 500 is similar to that illustrated in Figs. 4, 6, and 7, and thus a description thereof will be omitted.

Fig. 15 is a flowchart illustrating wireless communication processing (step S103 in Fig. 4) performed by the illumination-apparatus control unit 301 in the sender illumination apparatus 300 according to this embodiment. Steps S801 to S811 and S813 in Fig. 15 are similar to steps S201 to S212 in Fig. 5, respectively, and thus a description thereof will be omitted.

In step S812, the illumination-apparatus control unit 301 communicates with the camera control unit 101 using the illumination-apparatus shoe 306 and determines whether the camera body 100 is in a moving image capturing mode. In a case where the camera body 100 is in the moving image capturing mode, the flow proceeds to step S814. On the other hand, in a case where the camera body 100 is in a still image capturing mode rather than the moving image capturing mode, the flow proceeds to step S813.

In step S814, since the camera body 100 is in the moving image capturing mode, the illumination-apparatus control unit 301 turns off the light emission setting for the group in which the flashlight illumination apparatus 400 is selected. Fig. 16 is an external view of the wireless setting screen display of the sender illumination apparatus 300 according to this embodiment. In a case where the light emission setting is turned off, as illustrated in Fig. 16, the light emission setting for group A, to which the flashlight illumination apparatus 400 is assigned, is displayed as OFF. On the other hand, as illustrated in Fig. 16, groups B and C, to which the steady-light illumination apparatus 500 is assigned, remain set to emit light, and the display remains unchanged.

In this embodiment, the illumination-apparatus control unit 301 does not cause the flashlight illumination apparatus 400 to emit light in a case where the camera body 100 is in the moving image capturing mode (moving image capturing mode). In other words, in a case where the receiver illumination apparatus includes the flashlight illumination apparatus 400 and the camera body 100 is set to the moving image capturing mode, the light emission setting for the group to which the flashlight illumination apparatus 400 is assigned is automatically turned off. This configuration can provide an imaging system that provides proper illumination without using the flashlight illumination apparatus 400, which can only emit light momentarily and is not suitable for moving image capturing.

In this embodiment, after wireless connection is established, control is performed to confirm the state of the camera body 100 and turn off the light emission setting for the group to which the flashlight illumination apparatus 400 is connected, but this embodiment is not limited to this example. For example, information that the camera body 100 is in the moving image capturing mode is previously acquired and the flashlight illumination apparatus 400 may not be wirelessly connected. Alternatively, in a case where the flashlight illumination apparatus 400 is connected, the camera body 100 may be switched to a still image capturing mode.

Each embodiment can set proper illumination according to the illumination apparatus during imaging using multi-light illumination via wireless communications. Therefore, each embodiment can provide a control apparatus, an imaging system, a control method, and a storage medium (program), which can provide proper settings regarding light emission for each illumination apparatus capable of wireless communication.

### OTHER EMBODIMENTS

Embodiment(s) of the disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A control apparatus (300) comprising:
a control unit (301) configured to:
determine whether a first illumination apparatus (400) or a second illumination apparatus (500) is wirelessly connected, and
determine a setting regarding light emission for each of the first illumination apparatus and the second illumination apparatus so that the setting for the first illumination apparatus and the setting for the second illumination apparatus are different from each other, according to a determination result of a wireless connection,
**characterized in that** the first illumination apparatus and the second illumination apparatus belong to different groups, and the control unit is configured to determine the setting for each group.

2. The control apparatus according to claim 1, **characterized in that** the setting includes a setting regarding at least one of a group regarding the light emission, a light emission amount, a light emission mode, a color temperature, and a color.

3. The control apparatus according to claim 1 or 2, further comprising a display unit configured to display information on the setting.

4. The control apparatus according to claim 3, **characterized in that** a display content of the display unit is different between the setting for the first illumination apparatus and the setting for the setting of the second illumination apparatus.

5. The control apparatus according to claim 4, **characterized in that** the display unit changes the display content regarding the setting for each group.

6. The control apparatus according to any one of claims 1 to 5, **characterized in that** the control unit is configured to perform, according to a user selection, first light emission processing for light emission at a light emission amount ratio determined for each of a plurality of illumination apparatuses including one of the first illumination apparatus and the second illumination apparatus, or second light emission processing for light emission at a light emission amount determined individually for each of the plurality of illumination apparatuses.

7. The control apparatus according to claim 6, **characterized in that** the control unit is configured to perform the second light emission processing in a case where the first light emission processing is selected by a user and the second illumination apparatus is wirelessly connected.

8. The control apparatus according to any one of claims 1 to 7, **characterized in that** the first illumination apparatus performs illumination using flashlight, and the second illumination apparatus performs illumination using steady light.

9. The control apparatus according to any one of claims 1 to 8, **characterized in that** the control apparatus is an illumination apparatus that performs illumination using flashlight.

10. The control apparatus according to any one of claims 1 to 9, **characterized in that** the control apparatus is attachable to and detachable from an image pickup apparatus.

11. The control apparatus according to claim 10, **characterized in that** the control unit is configured to prohibit the light emission of the first illumination apparatus in a case where the image pickup apparatus is in a moving image capturing mode.

12. An imaging system comprising:
the control apparatus (300) according to any one of claims 1 to 11;
an image pickup apparatus (100);
the first illumination apparatus (400); and
the second illumination apparatus (500).

13. A control method comprising:
determining whether a first illumination apparatus (400) or a second illumination apparatus (500) is wirelessly connected; and
determining a setting regarding light emission for each of the first illumination apparatus and the second illumination apparatus so that the setting for the first illumination apparatus and the setting for the second illumination apparatus are different from each other, according to a determination result of a wireless connection,
**characterized in that** the first illumination apparatus and the second illumination apparatus belong to different groups, and determining is made for each group.

14. A program that causes a computer to execute the control method according to claim 15.
